# EUROPEAN PATENT APPLICATION

(11) **EP 1 790 500 A1**
(43) Date of publication of application: **30.05.2007**
(21) Application number: 06124909.0
(22) Date of filing: 28.11.2006
(51) Int. Cl.: B60B 3/04, B60B 7/06

(54) **A wheel for motor vehicle**

(30) Priority: 28.11.2005 IT TO20050836
(71) Applicant: Magnetto Wheels S.p.A., 10090 Rivoli (Torino) (IT)
(72) Inventor: Finzi, Andrea, 20050 Tregasio Frazione Di Truggio (MI) (IT); Gotta, Giacomo, 10080 Locana (Torino) (IT); Perris Magnetto, Gabriele, 10090 Rivoli (Torino) (IT)
(74) Representative: Quinterno, Giuseppe

(57) **Abstract**

The wheel comprises
a shaped rim (2) having two lateral seats (6, 7), one internal and one external, respectively, which are intended to receive corresponding beads of a tyre, and having a depressed central channel-like portion (8), and
a disc (3) which is fixed to the interior of the operatively external side of the rim (2) and which has a curved peripheral edge or border (3b) which is positioned internally adjacent the external lateral seat (6) of the rim (2).

The peripheral edge or border (3a) of the disc (3) is curved towards the exterior of the rim (2) and at least one retaining seat (3b), in which a wheel cover element can be engaged, is constructed in the internal surface thereof.

## Description

The present invention relates to a wheel for motor vehicles, and in particular a wheel for motor cars, of the type comprising
a shaped rim having two lateral seats, one internal and one external, respectively, which are intended to receive corresponding beads of a tyre, and having a central depressed channel-like portion, and
a disc which is fixed to the interior of the operatively external side of the rim and which has a curved peripheral edge or border which is positioned internally adjacent the external lateral seat of the rim.

There are known wheels of that type, wherein the above-mentioned peripheral edge or border of the disc is curved towards the inner side of the rim and is positioned adjacent the external surface of the base wall of the seat for the external bead of the tyre. In the disc of such a wheel, it is possible to construct peripheral apertures which extend radially outwards as far as, and optionally beyond, the base wall of the depressed central channel-like portion of the rim. Such apertures allow optimum ventilation of the braking devices of the wheel and the tyre. However, if such apertures extend radially outwards as far as a point beyond the base of the central channel-like portion of the rim, it is no longer readily possible to connect a so-called wheel cover or hub cap to the wheel.

An object of the present invention is to provide a wheel for motor vehicles of the type defined in the introduction which allows the disadvantage set out above to be overcome.

This object and other objects will be achieved according to the invention with a wheel for motor vehicles of the above-defined type, characterized in that the above-mentioned peripheral edge or border of the disc is curved towards the exterior of the rim and at least one retaining seat, in which a wheel cover element can be engaged, is constructed in the internal surface thereof.

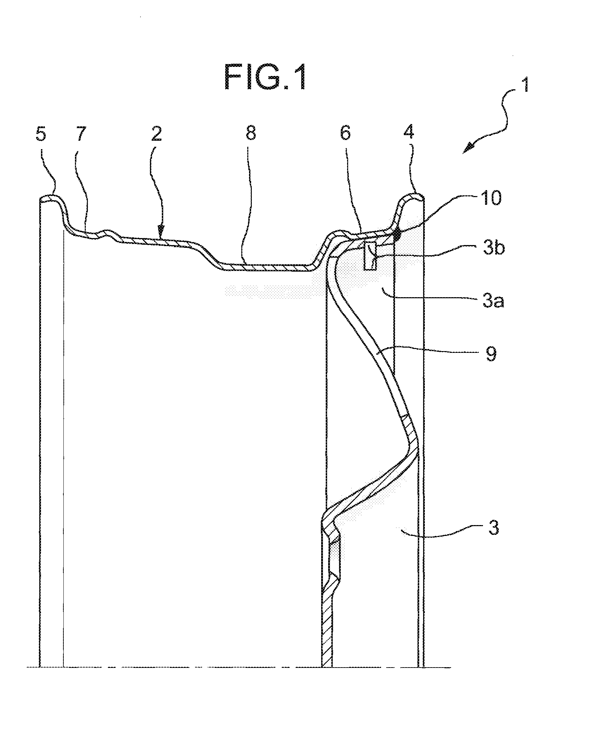

Further features and advantages of the invention will be appreciated from the following detailed description which is given purely by way of non-limiting example with reference to the appended drawing, in which Figure 1 is a partial axially sectioned view of a wheel according to the invention.

A wheel for motor vehicles according to the invention is generally designated 1 in Figure 1.

That wheel 1 comprises, in a manner known *per se,* a metal rim 2 which is constructed, for example, by means of pressing and rolling, and a disc 3 which is composed of pressed metal material.

The rim 2 has two lateral wave-like formations 4 and 5, one external and one internal, respectively, and, adjacent thereto, two lateral seats 6 and 7, one external and one internal, respectively, which are intended in a manner known *per se* to receive corresponding beads of a tyre.

The shaped rim 2 further has a depressed central portion 8 which is of channel-like form.

The disc 3 is fixed, for example, by means of welding or adhesive bonding, to the interior of the operatively external side of the rim 2.

The disc 3 has in particular a peripheral edge or border 3a which is curved towards the exterior of the rim 2. That peripheral edge or border 3a is positioned internally adjacent the external lateral seat 6 of the rim 2.

At least one retaining seat 3b is readily constructed in the internal surface of the peripheral edge or border 3a of the disc 3 and a corresponding anchoring member of a wheel cover element of a type known *per se* and not illustrated can be engaged therein.

As will be appreciated from the Figure, in the radially outermost part of the disc 3 it is possible to construct a plurality of wide apertures 9 which can extend radially up to a point beyond the base wall of the central channel-like portion 8 of the rim 2, without thereby compromising the possibility of fitting a wheel cover element to the wheel.

The apertures 9 can, if necessary, be constituted by real and actual notches which are able to interrupt the continuity of the outermost peripheral portion of the disc 3, defining a plurality of spoke-like formations, or the like, between them.

The retaining seats 3b which are constructed in the peripheral edge or border 3a of the disc 3 may be constituted by local or circumferential recesses, through-holes, etc.

As has already been referred to above, the disc 3 may be firmly connected to the rim 2 of the wheel by means of welding. In the case of conventional electrode welding, the weld bead may be constructed in the zone designated 10 in Figure 1.

Alternatively, it is possible to use methods of welding by means of laser beam. In that case, the welding may be carried out by directing a laser beam onto the base wall of the external seat 6 for the bead of the tyre, in the zone in which the peripheral edge or border 3a of the disc 3 is internally positioned adjacent that base wall of the seat 6.

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. A wheel for a motor vehicle, comprising
a shaped rim (2) having two lateral seats (6, 7), one internal and one external, respectively, which are intended to receive corresponding beads of a tyre, and having a central depressed channel-like portion (8), and
a disc (3) which is fixed to the interior of the operatively external side of the rim (2) and which has a curved peripheral edge or border (3b) which is positioned internally adjacent the external lateral seat (6) of the rim (2);
the wheel being **characterized in that** the peripheral edge or border (3a) of the disc (3) is curved towards the exterior of the rim (2) and at least one retaining seat (3b), in which a wheel cover element can be engaged, is constructed in the internal surface thereof.

2. A wheel for motor vehicles according to claim 1, wherein the disc (3) in the radially external portion thereof has a plurality of apertures (9).

3. A wheel for a motor vehicle according to claim 2, wherein the apertures (9) of the disc (3) extend radially outwards, up to a point beyond the base wall of the depressed central channel-like portion (8) of the rim (2).
